# EUROPÄISCHE PATENTSCHRIFT

(11) **EP 4 108 542 B1**
(45) Veröffentlichungstag und Bekanntmachung des Hinweises auf die Patenterteilung: **31.07.2024**
(21) Anmeldenummer: 22176305.5
(22) Anmeldetag: 31.05.2022
(51) Int. Cl.: B62B 9/10, B62B 7/14, B62K 7/04, B62J 1/16, B62J 1/28, B62B 7/00

(54) **KINDERSITZ-HALTEEINRICHTUNG**
CHILD SEAT RETENTION DEVICE
DISPOSITIF DE RETENUE POUR SIÈGE ENFANT

(30) Priorität: 17.06.2021 DE 202021103255 U
(43) Veröffentlichungstag der Anmeldung: 28.12.2022
(73) Patentinhaber: RTI Sports GmbH, 56070 Koblenz (DE)
(72) Erfinder: Zarza Aguado, Alejandro, 64646 Heppenheim (DE); Rasche, Johannes, 64285 Darmstadt (DE)
(74) Vertreter: dompatent von Kreisler Selting Werner - Partnerschaft von Patent- und Rechtsanwälten mbB

(56) Entgegenhaltungen:
- EP-A1- 2 075 185
- EP-A2- 2 036 767
- DE-U1- 202019 003 584

## Beschreibung

Die Erfindung betrifft eine Kindersitz-Halteeinrichtung für einen Lastenfahrradbehälter.

Lastenfahrräder weisen einen Lastenfahrradbehälter auf, in dem Lasten oder auch Kinder transportiert werden können. Diese Lastenfahrradbehälter sind häufig aus Kunststoffmaterial, Holz oder dergleichen hergestellt. Zum Transport von Kindern ist es bekannt, innerhalb der Lastenfahrradbehälter Sitze anzuordnen. Die Befestigung von Kindersitzen ist häufig unzureichend, sodass bei Unfällen beispielsweise ein Lösen der Sitze erfolgen kann. Wenn es sich bei den Kindersitzen um Sitzschalen oder Kindertragen handelt, die insbesondere für Kleinkinder geeignet sind, ist eine zuverlässige sichere Befestigung nicht gewährleistet.

Eine Kindersitz-Halteeinrichtung, die für Lastenfahrradbehälter geeignet ist und die Merkmale des Oberbegriffs des Anspruchs 1 aufweist, ist in DE 20 2019 003 584 beschrieben.

Aufgabe der Erfindung ist es eine Kindersitz-Halteeinrichtung für ein Lastenfahrradbehälter zu schaffen, mit der die Sicherheit verbessert ist.

Die Lösung der Aufgabe erfolgt erfindungsgemäß durch eine Kindersitz-Halteeinrichtung mit den Merkmalen des Anspruchs 1, sowie durch einen Lastenfahrradbehälter in Verbindung mit einer derartigen Kindersitz-Halteeinrichtung mit den Merkmalen des Anspruchs 12.

Die erfindungsgemäße Kindersitz-Halteeinrichtung für einen Lastenfahrradbehälter weist ein Haupthalteelement auf. Dies dient zur Befestigung an dem Lastenfahrradbehälter. Insbesondere erfolgt die Befestigung an einer Innenwand des Lastenfahrradbehälters, wobei es besonders bevorzugt ist, dass die Befestigung an Versteifungsstreben oder dergleichen erfolgt, um ein sicheres Befestigen oder eine gute Kraftübertragung zu gewährleisten. Zur Befestigung ist ein Trägerelement vorgesehen, dass den Kindersitz trägt. Bei dem Trägerelement kann es sich um Tragegurte oder dergleichen handeln, die mit dem Kindersitz verbunden sind. Insbesondere kann eine Verbindung mit einer Rückseite des Kindersitzes vorgesehen sein, wobei dies insbesondere bei als Sitzschalen oder Sitztragen ausgebildeten Kindersitzen vorteilhaft ist. Erfindungsgemäß ist zwischen dem Trägerelement und dem Halteelement ein Verbindungselement vorgesehen, dass derart ausgebildet ist, dass eine Positionsänderung des Kindersitzes, insbesondere zur Höhenverstellung, möglich ist. Mit diesem erfindungsgemäß vorgesehenen höhenverstellbaren Verbindungselement ist es insbesondere möglich die Sitzposition zu verändern. Dies ist bei Kindersitzen und insbesondere auch bei als Sitzschalen oder dergleichen ausgebildeten Kindersitzen vorteilhaft. Insofern ist hierdurch eine Neigungs- bzw. Positionsanpassung einer Sitzschale oder dgl. auf einfache Weise möglich.

Ferner weist die erfindungsgemäße Kindersitz-Halteeinrichtung den Vorteil auf, dass es sich um eine kostengünstige Lösung handelt, die insbesondere für auf dem Markt erhältlichen Sitzschalen und dgl. geeignet ist.

Besonders bevorzugt ist es, dass das Haupthalteelement ein oberes Befestigungselement, sowie ein unteres Befestigungselement zur Verbindung mit dem Lastenfahrradbehälter aufweist. Insbesondere erfolgt die Verbindung des oberen Befestigungselements und/oder des unteren Befestigungselements mit Verbindungsbügeln, Trägerelementen, Querstreben oder dergleichen des Lastenfahrradbehälters, um eine gute Kraftübertragung zu gewährleisten. Derartige Verbindungsbügel oder dergleichen sind in bevorzugter Ausführungsform aus einem stabilen Material, insbesondere aus einem Metall hergestellt.

Des Weiteren weist das Haupthalteelement mindestens ein, insbesondere zwei Gurtbänder auf. Beim Vorsehen von mehreren Gurtbändern verlaufen diese vorzugsweise zueinander parallel. Hierbei ist es besonders bevorzugt, dass die Gurtbänder in montiertem Zustand parallel zu einer Innenwand des Lastenfahrradbehälters verlaufen, insbesondere an diese anliegen oder nur einen geringen Abstand von insbesondere weniger als 3cm zur Innenwand des Lastenfahrradbehälters aufweisen. Die Sitzschale kann bezogen auf den Lastenfahrradbehälters mittig oder auch seitlich befestigt werden. Bei einer seitlichen Befestigung besteht ggf. die Möglichkeit einer weitere Sitzschale zu befestigen.

In einer bevorzugten Weiterbildung weisen das insbesondere Gurtbänder aufweisende Haupthalteelement Gurtschlaufen auf. Diese dienen zur Ausbildung des oberen und/oder des unteren Befestigungselements. Das Vorsehen von derartigen Gurtschlaufen hat mehrere Vorteile. Einerseits ist eine einfache Befestigung von Gurtschlaufen entweder unmittelbar über Zwischenelemente an Verbindungsbügeln, Querstreben oder dergleichen des Lastenfahrradbehälters möglich. Auch können Zwischenelemente, wie Streben, flache Halteelemente, wie Halteblech oder dergleichen vorgesehen sein, die entsprechende Öffnungen oder Ausnehmungen aufweisen, mit denen die Gurtschlaufen verbunden werden können.

Bei einer besonders bevorzugten Weiterbildung der Erfindung ist das höhenverstellbare Verbindungselement mit den zwei Gurtbändern verbunden. Eine Höhenverstellung kann hierbei derart erfolgen, dass Verbindungselement in unterschiedlichen Positionen ggf. stufenlos oder in Stufen verbunden werden kann. Alternativ und besonders bevorzugt ist es, dass das Verbindungselement fest mit dem Haupthalteelement, insbesondere dem ein oder den mehreren Gurtbändern verbunden ist. Eine Positionsänderung erfolgt sodann durch Ändern des mindestens eines Gurtbandes. Insbesondere wenn dies über Gurtschlaufen mit Verbindungsbügeln oder dergleichen des Lastenfahrradbehälters verbunden ist, kann die Lage des Gurtbandes auf einfache Weise variiert und somit die HöhenPosition des Verbindungselements variiert werden. Insbesondere durch bekannte Verbindungselemente von Gurten, wie sie bei Rucksackgurten oder dergleichen verwendet werden, ist es somit auf einfache Weise möglich die Position, insbesondere die Höhe des Verbindungselements und somit die Lage des Kindersitzes zu verändern.

Bei einer bevorzugten Weiterbildung der Erfindung ist das den Kindersitz tragenden Trägerelement mit dem Verbindungselement lösbar verbunden. Hierdurch ist es möglich, dass das Verbindungselement im Lastenfahrradbehälter verbleibt, während der Kindersitz entnommen wird Besonders bevorzugt ist es hierbei, dass die lösbare Verbindung durch Hakenelemente und Schlaufenelemente erfolgt. Hierbei können die entsprechenden Hakenelemente und Schlaufenelemente am Trägerelement und/oder am Verbindungselement vorgesehen sein. Es ist hierdurch auf einfache Weise möglich sehr schnell den Kindersitz mit dem Verbindungselement zu verbinden und somit im Lastenfahrradbehälter anzuordnen, bzw. zu entnehmen.

Das Trägerelement, das vorzugsweise mit einer Rückseite des Kindersitz verbindbar ist, weist in besonders bevorzugter Ausführungsform mindestens einen Trägergurt, insbesondere zwei Trägergurte auf. Vorzugsweise ist die Zahl der Trägergurte entsprechend der Zahl der Gurtbänder des Haupthalteelements. Bevorzugt ist es hierbei, dass jeweils ein Gurtband des Halteelements in derselben, insbesondere vertikalen, Ebene mit einem Trägergurt angeordnet ist. Hierdurch ist wiederum eine gute Kraftübertragung gewährleistet.

Bei einer besonders bevorzugten Weiterbildung der erfindungsgemäßen Kindersitz-Halteeinrichtung weist diese neben dem Haupthalteelement ein Zusatzhalteelement auf. Das Zusatzhalteelement ist in besonders bevorzugter Ausführungsform dem Haupthalteelement gegenüberliegend angeordnet. Das Zusatzhalteelement dient ebenfalls zur Befestigung des Kindersitzes am Lastenfahrradbehälter. Insbesondere erfolgt die Befestigung wiederum an einer Innenwand des Lastenfahrradbehälters. Wenn das Haupthalteelement an einer Rückwand des Lastenfahrradbehälters befestigt ist, ist es bevorzugt, dass das Zusatzhalteelement an einer Vorderwand des Lastenfahrradbehälters befestigt ist. Insbesondere sind die beiden Halteelemente an einander gegenüberliegenden Wänden des Lastenfahrradbehälters angeordnet. Bezogen auf das Zusatzhalteelement ist es möglich, dass dieses entsprechend des Haupthalteelements ausgebildet und wie vorstehend beschrieben bevorzugt weitergebildet ist. Insofern kann auch das Zusatzhalteelement über ein höhenverstellbares Verbindungselement mit dem Trägerelement verbunden sein. Ebenso ist es möglich, dass eine unmittelbare Verbindung zwischen dem Zusatzhalteelement und dem Trägerelement besteht. Besonders bevorzugt ist, unabhängig von der Ausgestaltung des Zusatzhalteelements, eine lösbare Verbindung mit dem Trägerelement. Vorzugsweise ist die Verbindung entsprechend der Verbindung mit dem Verbindungselement über Hakenelemente und Schlaufenelemente realisiert, sodass der Kindersitz, insbesondere eine Sitzschale oder Sitztrage auf einfache Weise aus dem Lastenfahrradbehälter entnommen, bzw. eingehängt werden kann.

Das Vorsehen eines Haupthalteelements in Verbindung mit einem insbesondere gegenüberliegenden Zusatzhalteelement weist den besonderen Vorteil auf, dass hierdurch eine Kindertrage oder Kinderschale freihängend innerhalb des Lastenfahrradbehälters angeordnet werden kann. Die Verbindung erfolgt über das Trägerelement ausschließlich mittelbar oder unmittelbar mit dem Haupthalteelement und dem Zusatzhalteelement. Der insbesondere als Sitztrage oder Sitzschale ausgebildete Kindersitz liegt somit insbesondere an keinem weiteren Element des Lastenfahrradbehälters an. Insbesondere liegt ein derartiger Kindersitz nicht an einem Bodenelement oder an Seitenwänden des Lastenfahrradbehälters an. Insofern ist eine Federung für den Kindersitz realisiert, sodass Stöße oder Schläge nicht unmittelbar und zumindest nur stark gedämpft auf den Kindersitz, insbesondere die Sitzschale übertragen werden.

Ferner betrifft die Erfindung einen Lastenfahrradbehälter mit einem innerhalb des Lastenfahrradbehälters angeordneten Kindersitz. Der Kindersitz ist über eine Kindersitz-Halteeinrichtung mit dem Lastenfahrradbehälter verbunden. Die Kindersitz-Halteeinrichtung ist, wie vorstehend beschrieben, ausgebildet und vorteilhaft weitergebildet.

Um die Sicherheit weiter zu erhöhen, ist es besonders bevorzugt, dass der Lastenfahrradbehälter mindestens einen Verbindungsbügel aufweist. Dieser Verbindungsbügel ist vorzugsweise umlaufend um den Lastenfahrradbehälter und stellt insofern eine Art Klammer dar. Insbesondere ist ein derartiger Verbindungsbügel aus Metall hergestellt oder weist Metall auf, so dass es sich um ein sehr stabiles Element handelt. Durch die klammer- oder rahmenförmige Ausgestaltung eines derartigen Verbindungsbügels kann eine hohe Steifigkeit und Stabilität erzielt werden. Erfindungsgemäß ist es daher besonders bevorzugt, dass das mindestens eine Sitzelement an diesem Verbindungsbügel mittelbar oder unmittelbar befestigt ist. Bei einem Unfall auftretende Kräfte, die beispielsweise durch einen Gurt auf das Sitzelement übertragen werden, werden somit im Wesentlichen in den Verbindungsbügel und nicht in den Lastenfahrradbehälter selbst eingeleitet. Dies hat den Vorteil, dass die Krafteinleitung nicht in einem vorzugsweise aus Kunststoff hergestellten Bauteil, nämlich im Lastenfahrradbehälter, sondern in einem deutlich stabileren Bauteil, nämlich dem insbesondere aus Metall hergestellten Verbindungsbügel, eingeleitet wird. In besonders bevorzugter Ausführungsform der Erfindung ist der Verbindungsbügel zumindest teilweise von dem insbesondere aus Kunststoffmaterial hergestellten Lastenaufnahmebehälter umgeben. Bevorzugt ist es, dass nur die Aufnahmestellen, an denen Sitzelementen oder Sicherheitsgurten befestigt werden können, nicht von Kunststoff umgeben sind.

Des Weiteren ist es bevorzugt, dass zusätzlich oder anstelle der Verbindungsbügel mindestens eine Verbindungsstrebe vorgesehen ist. Bevorzugt ist es, dass eine derartige Verbindungsstrebe in einem unteren Bereich angeordnet ist. Vorzugsweise erstrecken sich die Streben zwischen den beiden Seitenwänden des Fahrradbehälters und sind fest mit den beiden Seitenwänden verbunden. Die Verbindung des Sitzelements mit den Verbindungsstreben erfolgt vorzugsweise wiederum mittelbar oder unmittelbar. Bevorzugt ist hierbei wiederum das Vorsehen von Ösen oder rohrförmigen Elementen, durch die die Streben hindurchgeführt sind. Besonders bevorzugt ist es, dass das Haupthalteelement der Kindersitz-Halteeinrichtung über das obere Befestigungselement mit dem Verbindungsbügel und über das untere Befestigungselement mit der Verbindungsstrebe verbunden ist. Je nach Ausgestaltung des vorzugsweise vorgesehenen Zusatzhalteelements ist die zu entsprechend des Haupthalteelements ebenfalls mit dem Verbindungsbügel und der Verbindungsstrebe verbunden. Bei einer einfacheren Ausgestaltung des Zusatzhalteelements ist dieses vorzugsweise nur mit dem Verbindungsbügel verbunden.

In besonders bevorzugter Ausführungsform weist der Lastenfahrradbehälter einen insbesondere umlaufenden Verbindungsbügel und ein oder zwei Verbindungsstreben auf. Es ist insofern bevorzugt, dass das Sitzelement mit einer Verbindungsstrebe und dem Verbindungsbügel verbunden ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht eines Lastenfahrrads mit einem erfindungsgemäß ausgebildeten Lastenfahrradbehälter,
- Fig. 2: eine schematische perspektivische Seitenansicht eines Lastenfahrrads ohne Lastenfahrradbehälter, und
- Fig. 3: eine teilweise geschnittene schematische perspektivische Ansicht des Lastenfahrradbehälters.

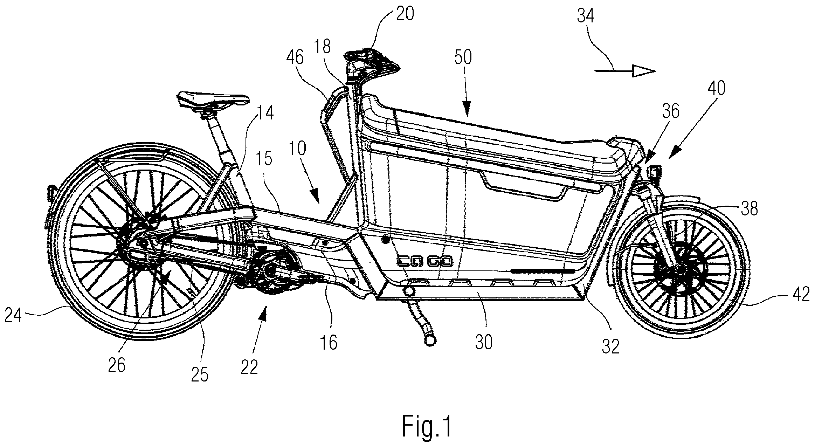

Eine bevorzugte Ausführungsform des erfindungsgemäßen Lastenfahrrads wie in Figur 1 dargestellt und weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 (Fig. 1) auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkerrohr 18 ist ein Griffelement 46 verbunden. Im dargestellten Ausführungsbeispiel ist das Griffelement an einer Rückseite des Lenkerrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkerrohr 18 angeordnet sind.

Um das Lastenrad anzuheben oder beispielsweise auf einen Hauptständer 60 zu heben, kann der Nutzer insbesondere am oberen Teil 48 des Griffelements angreifen.

Ein Lastenfahrradbehälter 50 weist ein Bodenelement 52, zwei Seitenelemente 54, eine Rückwand 56 sowie eine Vorderwand 58 auf. In dem dargestellten besonders bevorzugten Ausführungsbeispiel ist der Lastenfahrradbehälter aus im Wesentlichen zwei Kunststoffteilen, ausgebildet. Die beiden Kunststoffteile sind zu einer vertikalen Mittelebene, die in montiertem Zustand der Fahrradmittelebene entspricht, spiegelbildlich ausgebildet. Jede der beiden Kunststoffhälften weist somit eine Seitenwand 54, eine halbe Rückwand 56, eine halbe Vorderwand 58 und eine halbes Bodenelement 52 auf.

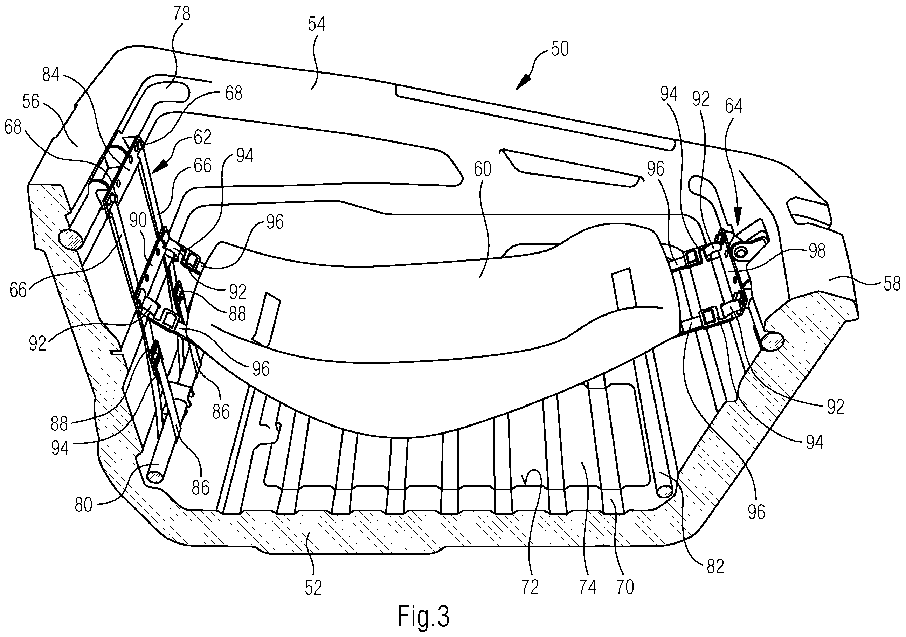

Die Entformungsrichtung ist senkrecht zur Seitenwand 54, d.h. senkrecht zur Zeichenebene der Fig. 3.

In dem Bodenelement 52 sind im dargestellten Ausführungsbeispiel als Rillen ausgebildete Ausnehmungen 70 vorgesehen, die an einer Innenseite des Bodenelements 52 angeordnet sind und sich ebenfalls in Entformungsrichtung erstrecken. Hierdurch kann die Oberfläche des Bodenelements strukturiert werden und ebenfalls die Steifigkeit verbessert werden. Ferner ist im Bodenelement eine Öffnung 72 vorgesehen. Durch diese Öffnung ist es möglich, die in montiertem Zustand zwischen den beiden Rahmenelementen 30 des Fahrradrahmens 10 angeordnete Batterie beispielsweise zur Wartung oder zur Entnahme zugänglich zu machen. Die Öffnung 72 ist von einem Deckel 74 verschlossen.

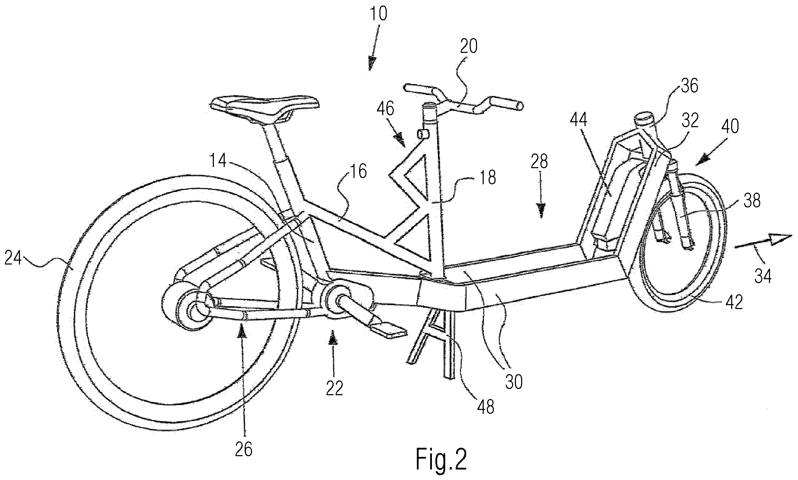

Die beiden dargestellten Hälften aus Kunststoff werden zu dem in Fig. 2 dargestellten Lastenfahrradbehälter 50 zusammengesetzt. Zur Fixierung bzw. Verbindung der beiden Hälften ist in einem oberen Bereich ein aus zwei Bügelelementen 78 bestehender Verbindungsbügel vorgesehen. Die beiden Bügelelemente werden im Bereich der Trennebene mit entsprechenden Verbindungselementen verbunden. Die Trennebene ist die in Fig. 3 dargestellte Vorderseite der Hälfte der Rückwand 56 bzw. der Hälfte der Vorderwand 58 sowie der Hälfte des Bodenelements 52. Die beiden Bügelelemente 78 werden fest miteinander verbunden bzw. verspannt, so dass diese eine Klammer im oberen Bereich des Lastenfahrradbehälters ausbilden.

Zur Verbindung der beiden Hälften aus Kunststoff sind ferner zwei Verbindungsstreben 80,82 vorgesehen. Zum Verspannen der beiden Hälften des Lastenfahrradbehälters weisen die Verbindungsstreben 80,82 beispielsweise auf einer Seite einen als Kopf ausgebildeten Ansatz auf, wobei an der anderen Seite der Streben eine Mutter aufgeschraubt wird. Ebenso können beide Verbindungsstreben ein Innengewinde aufweisen, so dass die Fixierung von außen durch insbesondere als Schrauben ausgebildete Fixierelemente erfolgen kann.

Innerhalb des Lastenfahrradbehälters 50 können nicht nur Lasten, sondern erfindungsgemäß ein Kindersitz 60 vorgesehen werden.

Zur Fixierung des Kindersitzes 60, bei dem es sich im dargestellten Ausführungsbeispiel um eine Kindertrage oder Kinderschale handelt, ist im dargestellten Ausführungsbeispiel ein Haupthalteelement 62, sowie ein Zusatzhalteelement 64 vorgesehen. Das Haupthalteelement 62 weist im dargestellten Ausführungsbeispiel zwei Gurtbänder 66 auf, die parallel zueinander und parallel zur Rückwand 56 verlaufen. Über als Schlaufen ausgebildete obere Befestigungselemente 68 sind die beiden Gurtbänder 66 an einem Querträger 84 befestigt. Der Querträger 84 ist beispielsweise über Schrauben fest mit dem Verbindungsbügel 78 verbunden. Ebenso wäre es möglich die als Gurtschlaufen 68 ausgebildeten oberen Befestigungselemente unmittelbar mit dem Verbindungsbügel 78 zu verbinden. Entsprechend sind im dargestellten Ausführungsbeispiel als untere Befestigungselemente 86 ebenfalls Gurtschlaufen ausgebildet, die unmittelbar mit der Verbindungsstelle 80 verbunden sind, bzw. diese umschlingen. Zum Spannen der beiden Gurtbänder 66 weisen diese bekannte Spannelemente oder Schnallen 88 auf.

Mit den beiden Gurtbändern 66 ist ein im dargestellten Ausführungsbeispiel plattenförmiges Verbindungselement 90 verbunden. Hierzu weist dieses Schlitze auf, durch die die beiden Gurtbänder 66 durchgeführt sind. Somit kann auf einfache Weise die Höhe des Trägerelements 90 variiert werden.

Mit dem Verbindungselement 90 sind zwei Schlaufenelemente 92 fest verbunden. In die Schlaufenelemente 92 können Hakenelemente 94 eingehängt werden. Die Hakenelemente 94 sind fest mit einem im dargestellten Ausführungsbeispiel zwei Trägergurte 96 aufweisenden Trägerelements verbunden.

Die beiden Trägergurte 96 laufen auf einer Rückseite oder Unterseite der Sitzschale entlang. An der gegenüberliegenden Seite weisen die beiden Trägergurte 96 wiederum Hakenelemente 94 auf. Die Hakenelemente 94 sind in Schlaufenelemente 92 eingehängt. Die Schlaufenelemente 92 sind Teil des Zusatzhalteelements 64. Das Zusatzhalteelement 64 weist ferner einen Querträger 89 auf, der fest mit dem Bereich der Vorderwand 58 angeordneten Verbindungsbügel 78 verbunden ist.

Da die Sitzschale 60, wie aus Figur 3 ersichtlich ist, frei innerhalb des Lastenfahrradbehälters 50 angeordnet ist, werden Stöße und dergleichen abgefedert und nur gedämpft auf die Sitzschale 60 übertragen.

## Patentansprüche

1. Kindersitz-Halteeinrichtung für einen Lastenfahrradbehälter, mit
einem Haupthalteelement (62) zum Befestigen am Lastenfahrradbehälter (50),
einem den Kindersitz (60) tragenden Trägerelement (94) und
einem zwischen dem Trägerelement (94) und dem Haupthalteelement (62) angeordneten Verbindungselement (90),
**dadurch gekennzeichnet, dass** das Haupthalteelement (62) mindestens ein Gurtband (66) aufweist, wobei das mindestens eine Gurtband (66) mit dem Verbindungselement (90) fest verbunden ist, wobei das Verbindungselement (90) zur Positionsänderung des Kindersitzes (60) verstellbar, insbesondere höhenverstellbar ist und die Positionsänderung mittels des mindestens einen Gurtbandes (66) erfolgt.

2. Kindersitz -Halteeinrichtung für einen Lastenfahrradbehälter nach Anspruch 1, **dadurch gekennzeichnet, dass** das Haupthalteelement (62) ein oberes Befestigungselement (66) und ein unteres Befestigungselement (86) zur Verbindung mit dem Lastenfahrradbehälter (50) insbesondere mit einem Verbindungsbügel (78) und/oder einer Verbindungsstrebe (80) des Lastenfahrradbehälters (50) aufweist.

3. Kindersitz -Halteeinrichtung für einen Lastenfahrradbehälter nach einem der Ansprüche 1 oder 2, **dadurch gekennzeichnet, dass** das Haupthalteelement (62) zwei Gurtbänder (66) aufweist, die vorzugweise parallel zueinander verlaufen.

4. Kindersitz -Halteeinrichtung für einen Lastenfahrradbehälter nach einem der Ansprüche 2 oder 3, **dadurch gekennzeichnet, dass** das obere Befestigungselement (68) und/oder das untere Befestigungselement (86) durch Gurtschlaufen ausgebildet ist.

5. Kindersitz -Halteeinrichtung für einen Lastenfahrradbehälter nach Anspruch 3, **dadurch gekennzeichnet, dass** das Verbindungselement (90) mit den zwei Gurtbändern (66) verbunden ist.

6. Kindersitz -Halteeinrichtung für einen Lastenfahrradbehälter nach Anspruch 5, **dadurch gekennzeichnet, dass** das Verbindungselement (90) fest mit den zwei Gurtbändern (66) verbunden ist und die Positionsänderung mittels der zwei Gurtbänder (66) erfolgt.

7. Kindersitz -Halteeinrichtung für einen Lastenfahrradbehälter nach Anspruch 1 bis 6, **dadurch gekennzeichnet, dass** das Trägerelement (96) lösbar mit dem Verbindungselement (90) verbunden ist, wobei insbesondere Halteelemente (94) vorgesehen sind, die lösbar mit Schlaufenelementen (92) verbunden sind.

8. Kindersitz -Halteeinrichtung für einen Lastenfahrradbehälter nach Anspruch 1 bis 7, **dadurch gekennzeichnet, dass** das Trägerelement (96) mit einer Rückseite des Kindersitzes (60) verbindbar ist.

9. Kindersitz -Halteeinrichtung für einen Lastenfahrradbehälter nach Anspruch 1 bis 8, **dadurch gekennzeichnet, dass** das Trägerelement, insbesondere zwei Trägergurte (96) aufweist.

10. Kindersitz -Halteeinrichtung für einen Lastenfahrradbehälter nach Anspruch 1 bis 9, **gekennzeichnet durch** ein Zusatzhalteelement (64) zum zusätzlichen Befestigen des Kindersitzes (60) am Lastenfahrradbehälter (50) wobei das Zusatzhalteelement (64) dem Haupthalteelement (62) vorzugsweise gegenüberliegend angeordnet ist.

11. Kindersitz -Halteeinrichtung für einen Lastenfahrradbehälter nach Anspruch 10, **dadurch gekennzeichnet, dass** das Trägerelement (96) mit dem Zusatzhalteelement (64) verbunden ist, wobei insbesondere Hakenelemente (94) vorgesehen sind, die lösbar mit Schlaufenelementen (92) verbunden sind.

12. Lastenfahrradbehälter, mit
einem innerhalb des Lastenfahrradbehälters (50) angeordneten Kindersitz (60) und
einer Kindersitz-Halteeinrichtung nach einem der Ansprüche 1 bis 11.

13. Lastenfahrradbehälter nach Anspruch 12, **dadurch gekennzeichnet, dass** der Lastenfahrradbehälter (50) einen insbesondere umlaufenden Verbindungsbügel (78) aufweist, wobei das Haupthalteelement (62) und/oder das Zusatzhalteelement (64) vorzugsweise mit dem Verbindungbügel (78) verbunden, insbesondere an diesen fixiert sind.

14. Lastenfahrradbehälter nach Anspruch 13, **dadurch gekennzeichnet, dass** der Lastenfahrradbehälter (50) eine Verbindungsstrebe (80, 82) aufweist und insbesondere das Haupthalteelement (62) mit dem Verbindungsbügel (78) und der Verbindungsstrebe (80) verbunden ist.

15. Lastenfahrradbehälter nach Anspruch 14, **dadurch gekennzeichnet, dass** das obere Befestigungselement (68) des Haupthalteelements (62) mit dem Verbindungsbügel (78) und das untere Befestigungselement (86) des Haupthalteelements (62) mit der Verbindungsstrebe (80) verbunden ist.

## Claims

1. A child seat retention device for a cargo bike box, comprising
a main retaining element (62) for attachment to the cargo bike box (50),
a support element (94) supporting the child seat (60), and
a connecting element (90) disposed between the support element (94) and the main retaining element (62),
**characterized in that** the main retaining element (62) comprises at least one belt strap (66), wherein the at least one belt strap (66) is firmly connected to the connecting element (90), wherein the connecting element (90) is adjustable, in particular height-adjustable, for changing the position of the child seat (60), and wherein the position is changed by means of the at least one belt strap (66).

2. The child seat retention device for a cargo bike box according to claim 1, **characterized in that** the main retaining element (62) comprises an upper fastening element (66) and a lower fastening element (86) for connection to the cargo bike box (50), in particular to a connecting bracket (78) and/or a connecting bar (80) of the cargo bike box (50).

3. The child seat retention device for a cargo bike box according to any one of claims 1 or 2, **characterized in that** the main retaining element (62) comprises two belt straps (66) that are preferably parallel to each other.

4. The child seat retention device for a cargo bike box according to any one of claims 2 or 3, **characterized in that** the upper fastening element (68) and/or the lower fastening element (86) is formed by belt loops.

5. The child seat retention device for a cargo bike box according to claim 3, **characterized in that** the connecting element (90) is connected to the two belt straps (66).

6. The child seat retention device for a cargo bike box according to claim 5, **characterized in that** the connecting element (90) is firmly connected to the two belt straps (66), and that the position is changed by means of the two belt straps (66).

7. The child seat retention device for a cargo bike box according to claims 1 to 6, **characterized in that** the support element (96) is detachably connected to the connecting element (90), wherein in particular retaining elements (94) are provided which are detachably connected to loop elements (92).

8. The child seat retention device for a cargo bike box according to claims 1 to 7, **characterized in that** the support element (96) is adapted to be connected to a rear side of the child seat (60).

9. The child seat retention device for a cargo bike box according to claims 1 to 8, **characterized in that** the support element comprises in particular two support belts (96).

10. The child seat retention device for a cargo bike box according to claims 1 to 9, **characterized by** an additional retaining element (64) for additionally fastening the child seat (60) to the cargo bike box (50), wherein the additional retaining element (64) is preferably arranged opposite the main retaining element (62).

11. The child seat retention device for a cargo bike box according to claim 10, **characterized in that** the support element (96) is connected to the additional retaining element (64), wherein in particular hook elements (94) are provided, which are detachably connected to the loop elements (92).

12. A cargo bike box, comprising
a child seat (60) disposed inside the cargo bike box (50), and
a child seat retention device according to any one of claims 1 to 11.

13. The cargo bike box according to claim 12, **characterized in that** the cargo bike box (50) comprises an in particular circumferential connecting bracket (78), wherein the main retaining element (62) and/or the additional retaining element (64) is preferably connected to the connecting bracket (78), in particular fixed thereto.

14. The cargo bike box according to claim 13, **characterized in that** the cargo bike box (50) comprises a connecting bar (80, 82), and that in particular the main retaining element (62) is connected to the connecting bracket (78) and the connecting bar (80).

15. The cargo bike box according to claim 14, **characterized in that** the upper fastening element (68) of the main retaining element (62) is connected to the connecting bracket (78), and that the lower fastening element (86) of the main retaining element (62) is connected to the connecting bar (80).

## Revendications

1. Dispositif de retenue de siège d'enfant pour une caisse de vélo cargo, comprenant
un élément de retenue principal (62) à fixer sur la caisse de vélo cargo (50),
un élément porteur (94) supportant le siège d'enfant (60) et
un élément de liaison (90) agencé entre l'élément porteur (94) et l'élément de retenue principal (62),
**caractérisé en ce que** l'élément de retenue principal (62) comprend au moins une sangle (66), ladite au moins une sangle (66) étant reliée de manière fixe à l'élément de liaison (90), l'élément de liaison (90) étant réglable, en particulier réglable en hauteur, afin de modifier la position du siège d'enfant (60) et la modification de position s'effectuant au moyen de ladite au moins une sangle (66).

2. Dispositif de retenue de siège d'enfant pour une caisse de vélo cargo selon la revendication 1, **caractérisé en ce que** l'élément de retenue principal (62) comprend un élément de fixation supérieur (66) et un élément de fixation inférieur (86) permettant une liaison avec la caisse de vélo cargo (50), en particulier avec un étrier de liaison (78) et/ou avec une entretoise de liaison (80) de la caisse de vélo cargo (50).

3. Dispositif de retenue de siège d'enfant pour une caisse de vélo cargo selon l'une quelconque des revendications 1 ou 2, **caractérisé en ce que** l'élément de retenue principal (62) comprend deux sangles (66) qui s'étendent de manière préférée parallèlement l'une à l'autre.

4. Dispositif de retenue de siège d'enfant pour une caisse de vélo cargo selon l'une quelconque des revendications 2 ou 3, **caractérisé en ce que** l'élément de fixation supérieur (68) et/ou l'élément de fixation inférieur (86) est/sont constitué(s) de boucles de sangle.

5. Dispositif de retenue de siège d'enfant pour une caisse de vélo cargo selon la revendication 3, **caractérisé en ce que** l'élément de liaison (90) est relié aux deux sangles (66).

6. Dispositif de retenue de siège d'enfant pour une caisse de vélo cargo selon la revendication 5, **caractérisé en ce que** l'élément de liaison (90) est relié de manière fixe aux deux sangles (66) et la modification de position s'effectue au moyen des deux sangles (66).

7. Dispositif de retenue de siège d'enfant pour une caisse de vélo cargo selon l'une quelconque des revendications 1 à 6, **caractérisé en ce que** l'élément porteur (96) est relié de manière amovible à l'élément de liaison (90), en particuliers, des éléments de retenue (94) reliés de manière amovible à des éléments de boucle (92) étant prévus.

8. Dispositif de retenue de siège d'enfant pour une caisse de vélo cargo selon la revendication 1 à 7, **caractérisé en ce que** l'élément porteur (96) peut être relié à une face arrière du siège d'enfant (60).

9. Dispositif de retenue de siège d'enfant pour une caisse de vélo cargo selon la revendication 1 à 8, **caractérisé en ce que** l'élément porteur comprend en particulier deux sangles de portage (96).

10. Dispositif de retenue de siège d'enfant pour une caisse de vélo cargo selon l'une quelconque des revendications 1 à 9, **caractérisé par** un élément de retenue supplémentaire (64) permettant une fixation supplémentaire du siège d'enfant (60) à la caisse de vélo cargo (50), l'élément de retenue supplémentaire (64) étant agencé de manière préférée en face de l'élément de retenue principal (62).

11. Dispositif de retenue de siège d'enfant pour une caisse de vélo cargo selon la revendication 10, **caractérisé en ce que** l'élément porteur (96) est relié à l'élément de retenue supplémentaire (64), en particulier, des éléments à crochet (94) reliés de manière amovible à des éléments de boucle (92) sont prévus.

12. Caisse de vélo cargo, comprenant
un siège d'enfant (60) agencé à l'intérieur de la caisse de vélo cargo (50) et
un dispositif de retenue de siège d'enfant selon l'une quelconque des revendications 1 à 11.

13. Caisse de vélo cargo selon la revendication 12, **caractérisé en ce que** la caisse de vélo cargo (50) comprend un étrier de liaison (78) en particulier périphérique, l'élément de retenue principal (62) et/ou l'élément de retenue supplémentaire (64) étant de manière préférée relié(s), en particulier fixé(s) à l'étrier de liaison (78).

14. Caisse de vélo cargo selon la revendication 13, **caractérisé en ce que** la caisse de vélo cargo (50) comprend une entretoise de liaison (80, 82) et, en particulier, l'élément de retenue principal (62) est relié à l'étrier de liaison (78) et à l'entretoise de liaison (80).

15. Caisse de vélo cargo selon la revendication 14, **caractérisé en ce que** l'élément de fixation supérieur (68) de l'élément de retenue principal (62) est relié à l'étrier de liaison (78) et l'élément de fixation inférieur (86) de l'élément de retenue principal (62) est relié à l'entretoise de liaison (80).
